# EUROPÄISCHE PATENTSCHRIFT

(11) **EP 3 525 306 B1**
(45) Veröffentlichungstag und Bekanntmachung des Hinweises auf die Patenterteilung: **09.09.2020**
(21) Anmeldenummer: 18305138.2
(22) Anmeldetag: 09.02.2018
(51) Int. Cl.: H02G 15/34, H01B 12/16

(54) **SUPRALEITFÄHIGES KABELSYSTEM MIT ÜBERDRUCKSCHUTZ**
SUPER-CONDUCTIVE CABLE SYSTEM WITH OVERPRESSURE PROTECTION
SYSTÈME EN CÂBLE SUPRACONDUCTEUR À PROTECTION CONTRE LA SURPRESSION

(43) Veröffentlichungstag der Anmeldung: 14.08.2019
(73) Patentinhaber: Nexans, 92400 Courbevoie (FR)
(72) Erfinder: SCHMIDT, Frank, 30855 Langenhagen (DE); ESSLER, Jürgen, 31515 Wunstorf (DE); ALLWEINS, Kai, 30890 Barsinghausen (DE)
(74) Vertreter: Feray, Valérie

(56) Entgegenhaltungen:
- EP-A1- 1 667 172
- EP-A1- 1 887 671
- EP-A1- 2 418 747

## Beschreibung

### Gebiet

Die Erfindung betrifft ein supraleitfähiges Kabelsystem mit Überdruckschutz. Insbesondere betrifft die Erfindung ein supraleitfähiges Kabelsystem mit einer Berstscheibe.

### Hintergrund

Supraleitfähiges Material hat unter anderem die Eigenschaft, dass sein elektrischer Widerstand auf Null sinkt, wenn es auf Temperaturen unterhalb der sogenannten Sprungtemperatur abgekühlt wird. Bei der Sprungtemperatur geht es in den sogenannten supraleitenden Zustand über. Der supraleitende Zustand existiert so lange wie die Temperatur T, die Stromstärke I und das magnetische Feld B unter entsprechenden kritischen Werten bleiben, die individuell von dem jeweiligen supraleitfähigen Material abhängen. Bevor im April 1986 Supraleitung in keramischen Materialien entdeckt wurde, war Supraleitung nur bei einigen Metallen bekannt. Unter den keramischen Supraleitern sind vor allem diejenigen Verbindungen von praktischer Bedeutung, deren Sprungtemperatur oberhalb der Temperatur von flüssigem Stickstoff (LN₂) liegt, die 77 K (-196 °C) beträgt. Dieser Wert ist deshalb von besonderer Bedeutung, weil flüssiger Stickstoff ein vergleichsweise kostengünstiges Kühlmittel darstellt. Geeignete keramische Materialien sind beispielsweise mit seltenen Erden dotierte Materialien, die unter der Bezeichnung ReBCO (Rare-Earth-Barium-Kupfer-Oxid) bekannt geworden sind. Zu den keramischen Materialien, welche die genannten Eigenschaften erfüllen, gehört insbesondere YBCO (Yttrium-Barium-Kupfer-Oxid) mit einer Sprungtemperatur von 92 K. Ein anderes dieser supraleitfähigen Materialien ist beispielsweise BSCCO (Wismut-Strontium-Kalzium-Kupfer-Oxid) mit einer Sprungtemperatur von 110 K. Für die genannten supraleitfähigen Materialien geeignete Kühlmittel sind beispielsweise Stickstoff, Helium, Neon und Wasserstoff, jeweils in flüssigem Zustand.

Ein supraleitfähiges Kabel hat in heutiger Technik elektrische Leiter aus einem Verbundwerkstoff, welcher keramisches Material enthält, das bei ausreichend tiefen Temperaturen in den supraleitenden Zustand übergeht. Der elektrische Gleichstromwiderstand eines entsprechend aufgebauten Leiters ist bei ausreichender Kühlung Null, solange eine bestimmte Stromstärke und eine bestimmte Magnetfeldstärke nicht überschritten werden. Um die erforderlichen niedrigeren Temperaturen zu erreichen, ist der supraleitfähige Leiter von einem Kabelkryostaten umgeben, der das Kühlmittel, insbesondere flüssigen Stickstoff, enthält und die Einstrahlung von Umgebungswärme auf das Kühlmittel und das supraleitfähige Kabel weitgehend unterbindet.

Das supraleitfähige Kabel besteht aus einem druckfesten metallischen Innenbehälter oder Innenrohr, in dem das flüssige Kühlmittel vorhanden ist und in den das Kabel hineinragt und aus einem metallischen Außenbehälter oder Außenrohr, der vom Innenbehälter durch einen Zwischenraum getrennt ist, in dem eine Vakuumisolierung vorhanden ist. Der Innenbehälter muss so dimensioniert sein, dass er alle möglichen Druckerhöhungen, insbesondere schlagartige Druckerhöhungen, unbeschadet übersteht.

Das Kühlmittel umspült und kühlt das Kabel. Das Kühlmittel dringt während der Inbetriebnahme des Systems nach und nach durch den Schirm des Kabels in dessen Dielektrikum ein. Im Betrieb des supraleitfähigen Kabels steht das Kältemittel unter einem bestimmten Betriebsdruck, um die dielektrische Festigkeit der Hochspannungsisolierung zu gewährleisten. Das Kühlmittel wirkt dabei auch als Imprägniermittel für das Dielektrikum.

Größere Kabellängen werden realisiert, indem mehrere supraleitende Kabel mit Muffen zusammen gefügt werden, wie sie beispielsweise aus der europäischen Patentanmeldung EP 2 105 994 A1 bekannt sind. Das Kabel ist in einem solchen Fall also aus mehreren Abschnitten oder Sektionen aufgebaut. Dementsprechend wird auch die Vakuumisolierung des Kabelkryostaten bei langen Systemen abschnittsweise realisiert, so dass typischerweise eine Vakuumsektion nicht länger als zwischen zwei Kabelmuffen ausgeführt wird. Bei einer mechanischen Beschädigung einer Vakuumsektion, bei der das Innenrohr intakt bleibt, verliert diese Sektion schlagartig die thermisch isolierende Wirkung des Vakuums. Infolgedessen entsteht durch die um mehrere Größenordnungen höhere Wärmelast ein Druckanstieg im System, der mittels Überdruckentlastungseinrichtungen im Rahmen gehalten muss. D.h. der Druck darf grundsätzlich nicht über eine Höchstbelastungsgrenze des Innenbehälters ansteigen. Die Druckentlastungseinrichtungen sind vorzugsweise an beiden Enden des Systems positioniert. Bei langen Systemen kann während der Druckentlastung jedoch ein erheblicher Druckabfall der Stickstoffströmung entlang des Innenbehälters von der Fehlerstelle zu einer Druckentlastungseinrichtung hin auftreten. Dieser Druckabfall kann zu einem Druck an der Fehlerstelle führen, der den zulässigen Druck des Innenbehälters für diesen Betriebsfall deutlich überschreitet, so dass eine Beschädigung des Innenbehälters auftreten kann.

Um dieser Gefahr zu begegnen, ist es bekannt, den hydraulischen Querschnitt des Innenbehälters und somit des gesamten supraleitfähigen Kabels zu vergrößern, so dass der Druckabfall entlang des Kabels entsprechend reduziert wird, wodurch im Fehlerfall der Druck im Innenbehälter den zulässigen Druck für den Innenbehälter nicht überschreitet. Alternativ dazu ist es bekannt, zusätzliche Druckentlastungseinrichtungen nach außen entlang der Kabelstrecke anzubringen. Bei der ersten Variante ist nachteilig, dass der Durchmesser des supraleitfähigen Kabels zunimmt, so dass der Installationsaufwand ebenfalls zunimmt. Darüber hinaus nimmt die maximale Kabellänge ab, die auf eine Kabelspule passt, so dass bei einer gegebenen Gesamtlänge eine größere Anzahl von Kabelabschnitten miteinander zu verbinden sind. Bei der zweiten Variante besteht die Gefahr, dass Verunreinigungen in das Innere des Kabelkryostaten eindringen können und bei einer nachfolgenden Wiederinbetriebnahme des Kabels Störungen verursachen können.

EP 2 418 747 A1 offenbart den Oberbegriff des Anspruchs 1. Hiervon ausgehend hat die vorliegende Erfindung die Aufgabe, ein supraleiterfähiges Kabelsystem mit wenigstens zwei supraleitfähigen Kabeln zu schaffen, deren Innenbehälter einen plötzlichen Druckanstieg unbeschadet übersteht, wobei gleichzeitig die Nachteile bekannter Lösungen vermieden werden sollen.

### Zusammenfassung der Erfindung

Zur Lösung dieser Aufgabe schlägt die Erfindung ein Kabelsystem mit wenigstens zwei supraleitfähigen Kabeln vor, die jeweils einen supraleitfähigen Leiter aufweisen, der in einem Innenraum eines vakuumisolierten Kabelkryostaten aufgenommen ist. In dem Kabelkryostaten ist Kühlmittel enthalten, das den supraleitfähigen Leiter im Betrieb des Kabelsystems auf Temperaturen unterhalb einer Sprungtemperatur des supraleitfähigen Leiters hält. Zwischen den kühlmittelführenden Innenräumen der Kabelkryostaten ist eine Verbindung angeordnet, die im Normalbetrieb mit einer Berstscheibe verschlossen ist, so dass die Innenräume der Kabelkryostaten strömungsmäßig voneinander getrennt sind.

Wenn im Fehlerfall in dem Innenraum eines Kabelkryostaten ein unzulässig hoher Druck entsteht, der nicht ausreichend schnell über Druckentlastungseinrichtungen an den Enden des betreffenden supraleitfähigen Kabels abgeleitet werden kann, dann birst die Berstscheibe, worauf eine strömungsmäßige Verbindung zwischen den Innenräumen zweier supraleiterfähiger Kabel entsteht. Dadurch vergrößert sich der hydraulische Querschnitt des Kabelsystems durch den der Überdruck zu den Druckentlastungseinrichtungen hin abgeleitet werden kann. Auf diese Weise lässt sich der Druckanstieg in dem betroffenen Innenraum wirksam begrenzen, insbesondere auf Werte, die nicht zu einer Beschädigung eines Innenrohres des betroffenen Kabelkryostaten führen.

Bei einer vorteilhaften Weiterbildung der Erfindung sind in der Verbindung zwei Berstscheiben angeordnet, zwischen denen ein Hohlraum eingeschlossen ist.

Zweckmäßigerweise herrscht im Normalbetrieb des Kabelsystems in dem Hohlraum zwischen den zwei Berstscheiben ein Druck, der niedriger ist, als der Druck in den Innenräumen der Kabelkryostaten. Der Druck in dem Hohlraum ist ungefähr gleich wie der Atmosphärendruck. Durch diese Anordnung ist der Druck, bei dem die Berstscheibe auslöst sehr genau einstellbar.

Bei einem vorteilhaften Ausführungsbeispiel haben die Berstscheiben eine konkav-konvexe Gestalt. In diesem Fall ist die konvexe Seite der Berstscheiben zu der Seite mit dem höheren Druck hin gerichtet.

Mit Vorteil ist die Verbindung vakuumisoliert, um einen zusätzlichen Wärmeeintrag in das Kabelsystem durch die Verbindung möglichst gering zu halten.

Vorteilhafterweise ist das Vakuum der Verbindung von dem Vakuum der Kabelkryostaten getrennt. Mehrere voneinander getrennte Sektionen der Vakuumisolierung stellen sicher, dass in einem Fehlerfall, bei dem ein Leck in einem Außenrohr entsteht, die Vakuumisolierung nur in einem Teilbereich des Kabelsystems verloren geht, während andere Bereiche intakt bleiben.

Es hat sich als vorteilhaft erwiesen, wenn sich die vakuumisolierten Bereiche des Kabelkryostaten und der Verbindung überlappen. Auf diese Weise wird eine gute Isolierung sichergestellt.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: eine schematische Darstellung eines supraleitfähigen Kabels;
- Fig. 2: eine schematische Darstellung des Aufbaus des supraleitfähigen Kabels aus Figur 1;
- Fig. 3: ein Kabelsystem aus drei supraleitfähigen Kabeln im Normalbetrieb;
- Fig. 4A: eine Doppelberstscheibeneinrichtung in einer Querschnittsansicht; und
- Fig. 4B: ein Ausschnitt aus Figur 4A.

Gleiche oder ähnliche Elemente sind in den Figuren mit gleichen oder ähnlichen Bezugszeichen versehen.

### Ausführungsbeispiel

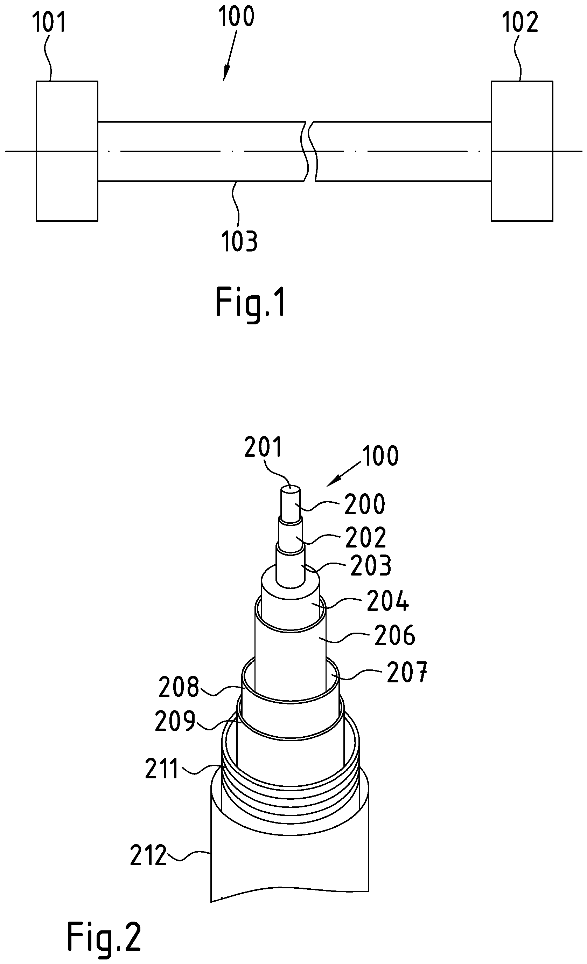

In Figur 1 ist rein schematisch ein supraleitfähiges Kabel 100 dargestellt, das an seinen Enden jeweils einen Endverschluss 101, 102 aufweist. Zwischen den Endverschlüssen 101, 102 erstreckt sich ein Kabelkryostat 103, der auch kurz als Kryostat bezeichnet wird. Der Kryostat 103 umschließt mindestens eine supraleitfähige Kabelader. Das supraleitfähige Kabel 100 bestehend aus Kryostat und Kabelader ist in Figur 2 in größerer Einzelheit dargestellt. Die Endverschlüsse 101, 102 ermöglichen den Anschluss des Supraleiterkabels an konventionelle Mittelspannungs- oder Hochspannungstechnik und dienen außerdem dazu, den Temperaturgradienten zwischen dem stickstoffgekühlten supraleitfähigen Kabel und damit in Berührung stehender Komponenten und der Umgebung zu bewältigen.

In einem anderen Ausführungsbeispiel ist anstelle des Endverschlusses 101 und oder des Endverschlusses 102 eine Muffe vorgesehen, die eine Verbindungsstelle zu einem weiteren supraleitfähigen Kabel 100 bildet. Auf diese Weise ist es möglich, das supraleitfähige Kabel 100 zu verlängern.

Figur 2 zeigt beispielhaft den Aufbau des supraleitfähigen Kabels 100. Auf einem hohlen Formkörper 200, der einen Hohlraum 201 umschließt, sind supraleitfähige Bänder angeordnet, die eine supraleitfähige Schicht 202 bilden. Die supraleitfähige Schicht 202 ist von einer bandförmigen halbleitenden Leiterglättung 203 umgeben. Auf der Leiterglättung 203 ist ein Dielektrikum 204 angeordnet, dass von einem elektrisch leitenden Schirm 206 umgeben ist, der zum Beispiel aus Kupferdrähten oder Kupferbändern oder ebenfalls aus supraleitfähigen Bändern gebildet ist. Zwischen Dielektrikum 204 und Schirm 206 ist eine weitere halbleitende Schicht (nicht dargestellt) angeordnet. Die halbleitenden Schichten dienen der Glättung des elektrischen Felds im Kabel, indem sie runde Oberflächen schaffen und Kanten eliminieren.

Die genannten Komponenten sind in einem Hohlraum 207 angeordnet, der von einem inneren Kryostatrohr oder Innenrohr 208 umschlossen ist. Im Betrieb des supraleitfähigen Kabels 100 fließt das zur Kühlung eingesetzte Kühlmittel in dem Hohlraum 207. Die Außenseite des inneren Kryostatrohres 208 ist von einer Superisolation 209 umgeben, die ihrerseits von einem äußeren Kryostatrohr oder Außenrohr 211 eingeschlossen ist. Der Zwischenraum zwischen dem inneren Kryostatrohr 208 und dem äußeren Kryostatrohr 211 ist evakuiert und bildet eine Vakuumisolation zwischen dem inneren Kryostatrohr 208 und dem äußeren Kryostatrohr 211. Bei manchen Ausführungsbeispielen sind zusätzlich zu der Superisolation 209 Abstandshalter (nicht gezeigt) vorgesehen, die verhindern, dass sich die Kryostatrohre 208, 211 berühren. Die Kryostatrohre 208, 211 sind vorzugsweise aus Edelstahl hergestellt. Mit Vorteil sind die Kryostatrohre 208, quer zu ihrer Längsrichtung oder schraubenlinienförmig gewellt. Zum Schutz vor Beschädigungen und vor anderen Umwelteinflüssen wie Feuchtigkeit oder aggressiven Substanzen ist das äußere Kryostatrohr 211 von einem Mantel umgeben, der beispielsweise aus Polyethylen (PE) oder (PVC) hergestellt ist.

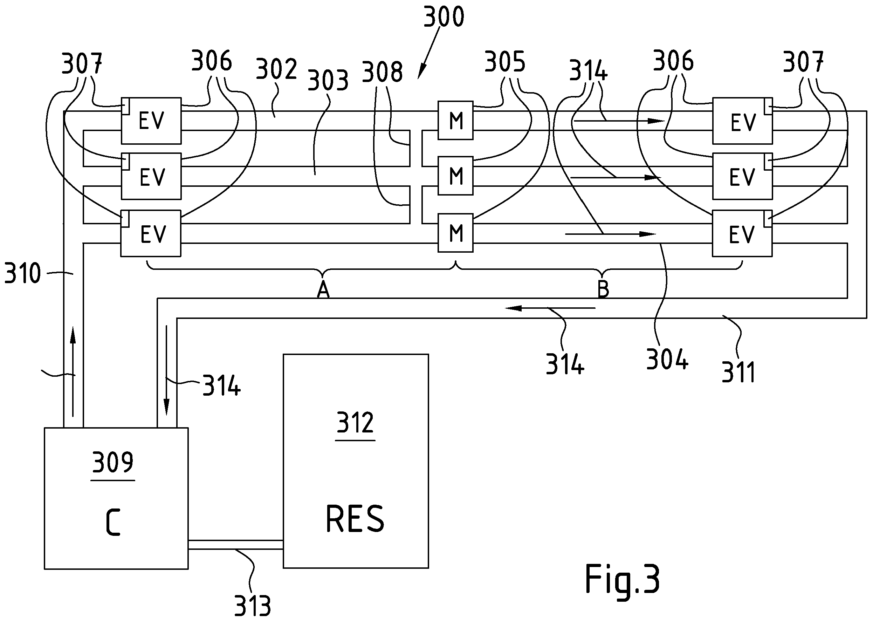

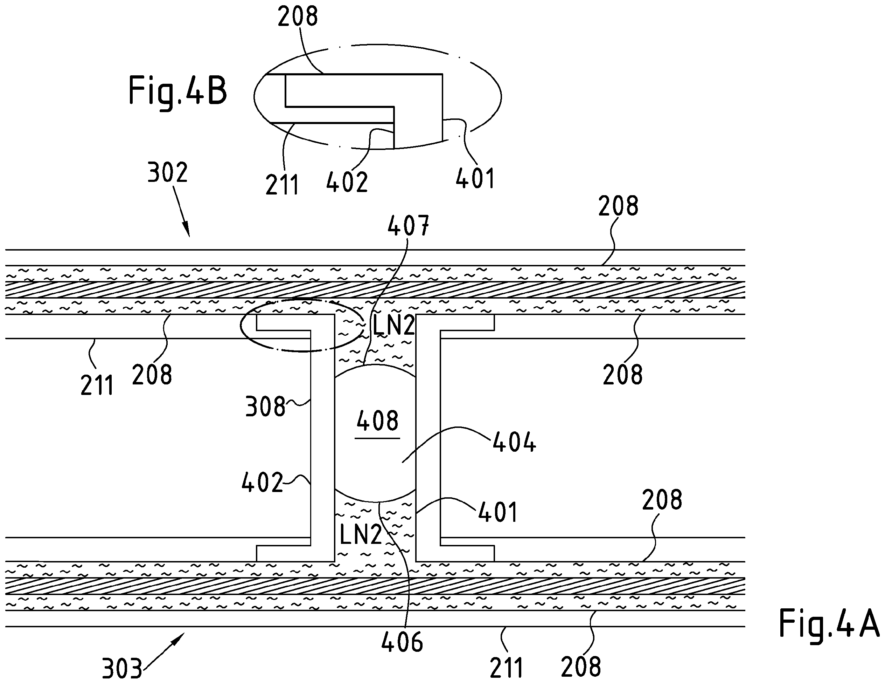

Figur 3 zeigt ein supraleitfähiges Kabelsystem 300 mit drei supraleitfähigen Kabeln 302, 303 und 304, die jeweils aus zwei an einer Muffe 305 zusammengefügten Kabelabschnitten A und B aufgebaut sind. Die supraleitfähigen Kabeln 302, 303 und 304 sind beispielsweise so aufgebaut wie das in Figur 2 gezeigte Kabel 100. Jedes der supraleitfähigen Kabel 302, 303, 304 ist an seinem ersten Ende und an seinem letzten Ende mit einem Endverschluss 306 versehen. An jedem Endverschluss 306 ist jeweils eine Druckentlastungseinrichtung 307 angeordnet, die im Bedarfsfall Kühlmittel an die Umgebung abgibt, um einen unzulässigen Druckanstieg in dem Innenbehälter der Kabelkryostaten zu verhindern. Zwischen den Muffen 305 sind Verbindungen 308 angeordnet, deren Aufbau und Funktion weiter unten im Zusammenhang mit Figur 4 in größerer Einzelheit beschrieben wird.

Eine Kühlanlage 309 ist über eine Zufuhrleitung 310 für Kühlmittel mit den Endverschlüssen 306 an dem ersten Ende der supraleitfähigen Kabel 302, 303, 304 verbunden. Die Endverschlüsse 306 an dem zweiten Ende der supraleitfähigen Kabel 302, 303, 304 sind über eine Rückleitung 311 für Kühlmittel an die Kühlanlage 309 angeschlossen. Ein Kühlmittelvorratstank 312, der mit Vorteil als Kryotank ausgebildet ist, ist über eine Speiseleitung 313 mit der Kühlanlage 309 verbunden. Die Zufuhrleitung 310, die Rückleitung 311 sowie die Speiseleitung 313 sind vorzugsweise als Kryoleitungen ausgebildet, d.h. als doppelwandige vakuumisolierte Leitungen.

Figur 4 zeigt eine der Verbindungen 308 in größerer Einzelheit und im Querschnitt. In Figur 4A ist zum Beispiel die Verbindung 308 zwischen dem Kabel 302 und 303 gezeigt. Wie aus Figur 3 ersichtlich ist, ist die Verbindung 308 in dem Abschnitt Ader Kabel 302 bzw. 303 angeordnet. Die Verbindung 308 kann aber ebenso gut in dem Abschnitt B der Kabel 302 bzw. 303 angeordnet sein.

Die Verbindung 308 weist ein Innenohr 401 sowie ein Außenrohr 402 auf. Das Innenohr 401 und das Außenrohr 402 sind voneinander beabstandet und schließen einen Zwischenraum 403 ein, der evakuiert ist und einen vakuumisolierten Kryostaten bildet. Eine Besonderheit besteht darin, dass sich die Kryostaten der Verbindungen 308 und der Kabel 302 bzw. 303 überlappen, so dass eine durchgängige Vakuumisolierung erreicht wird, wobei gleichzeitig die Vakua in den Kryostaten der Kabel 302, 303 und der Verbindung 308 voneinander getrennt bleiben, wie es insbesondere aus dem in Figur 4B gezeigten Ausschnitt ersichtlich ist. Das hat den Vorteil, dass bei einem Vakuumverlust in einem Teilbereich des Kabelsystems nicht die Vakuumisolierung des gesamten Kabelsystems verloren geht. Das Innenrohr 401 der Verbindung 308 umschließt einen Innenraum 404, in welchem mittels zweier Berstscheiben 406,407 ein Hohlraum 408 abgegrenzt ist. In dem Hohlraum 408 herrscht ungefähr Atmosphärendruck. Der Druck in dem Hohlraum 408 ist somit geringer als in den Innenräumen der Kabelkryostaten, wo der jeweilige Betriebsdruck des Kühlmittels herrscht. Das Kühlmittel ist zum Beispiel flüssiger Stickstoff (LN₂).

Die Berstscheibe 406 trennt den mit Kühlmittel gefüllten Innenraum des Kabels 303 von dem Hohlraum 408 und die Berstscheibe 407 trennt den mit Kühlmittel gefühlt Innenraum des Kabels 302 von dem Hohlraum 408 ab. Folglich besteht im Normalbetrieb zwischen den Innenräumen der Kryostaten der Kabel 302,303 keine strömungsmäßige Verbindung. Die Berstscheiben 406,407 sind dünne, konkav-konvex ausgebildete Stahlscheiben, deren konvexe Seite jeweils zu dem Kühlmittel hin gerichtet ist, wo der Druck höher ist als in dem Hohlraum 408.

Im Falle einer mechanischen Beschädigung eines Außenrohres eines Kabelkryostaten verliert der betreffende Abschnitt des supraleitfähigen Kabels schlagartig seine thermische Isolierung. In der Folge entsteht eine um mehrere Größenordnungen höhere Wärmelast, die dazu führt, dass Kühlmittel - zum Beispiel flüssiger Stickstoff - verdampft und ein erheblicher Druckanstieg in dem Innenrohr des Kabelkryostaten erfolgt. In dem beschriebenen Fehlerfall ist der Druckanstieg in der Regel so hoch, dass er ohne Druckentlastung zu einer Beschädigung des Innenrohres führt. Wie eingangs beschrieben wurde, sind Druckentlastungseinrichtungen 307 an den Endverschlüssen 306 des betroffenen supraleitfähigen Kabels in vielen Fällen nicht ausreichend, um den Druckanstieg auf Werte zu begrenzen, denen das Innenohr unbeschadet widerstehen kann. Die Berstscheiben 406,407 dienen dazu, den Druckanstieg wirksam zu begrenzen.

Unter der Annahme, dass das Außenrohr des Kabels 302 in einem Abschnitt beschädigt wird, steigt der Innendruck in dem entsprechenden Innenraum desselben Abschnittes schlagartig an und bringt die Berstscheibe 407 zum Bersten, so dass das unter hohem Druck stehende Kühlmittel aus dem Innenraum des Kabels 302 den Hohlraum 408 füllt und dadurch die Berstscheibe 406 ebenfalls zum Bersten bringt. In diesem Moment entsteht eine strömungsmäßige Verbindung zwischen den Innenräumen der Kabelkryostaten der Kabel 302 und 303 mit der Folge, dass sich der hydraulische Querschnitt, der zur Ableitung des Überdruckes zur Verfügung steht, verdoppelt. Auf diese Weise gelingt es, den Druckanstieg in dem von der Beschädigung betroffenen Kabelabschnitt auf Werte zu begrenzen, bei denen keine Beschädigung des Innenrohres eintritt.

Bei Beschädigung von mehreren Kabelabschnitten, bei der es zu einem extremen Druckanstieg kommt, ist es auch möglich, dass die Berstscheiben in mehreren Verbindungen bersten und die Innenräume von mehr als zwei Kabeln strömungsmäßig miteinander verbunden werden und damit gemeinsam zur Verfügung stehen, um den Überdruck abzuleiten.

Bei einer einfacher aufgebauten Abwandlung der Erfindung ist in der Verbindung 308 nur eine einzige Berstscheibe vorgesehen, die dann birst, wenn eine entsprechend hohe Druckdifferenz zwischen den Innenräumen der Kabelkryostaten herrscht, welche die Verbindung 308 miteinander verbindet. Nachteilig ist bei dieser Abwandlung, dass das Bersten der Berstscheibe von einer Druckdifferenz abhängt, was in Ausnahmefällen dazu führen könnte, dass der Druckanstieg in den Innenräumen nicht wirksam begrenzt wird. Das wäre beispielsweise dann der Fall, wenn der Druck in beiden Innenräumen gleichzeitig ansteigt. Schwankungen des Kühlmitteldruckes können auch dazu führen, dass die Berstscheibe nicht bei einem definierten Überdruck auslöst.

Diese Nachteile werden durch die Anordnung mit zwei Berstscheiben vermieden.

**Bezuaszeichenliste**

| | | | |
|---|---|---|---|
| 100 | supraleitfähiges Kabel | 401 | Innenohr |
| 101,102 | Endverschluss | 402 | Außenrohr |
| 200 | Formkörper | 403 | Zwischenraum |
| 201 | Hohlraum | 404 | Innenraum |
| 202 | Supraleitfähige Leiterschicht | 406,407 | Berstscheiben. |
| 203 | Leiterglättung | 408 | Hohlraum |
| 204 | Dielektrikum | | |
| 206 | Schirm | | |
| 207 | Hohlraum | | |
| 208 | Inneres Kryostatrohr | | |
| 209 | Superisolation | | |
| 211 | Äußeres Kryostatrohr | | |
| 212 | Mantel | | |
| 300 | Kabelsystem | | |
| 302-304 | Kabel | | |
| 306 | Endverschluss | | |
| 307 | Druckentlastungseinrichtung | | |
| 308 | Verbindungsleitung | | |
| 309 | Kühlanlage | | |
| 310 | Zufuhrleitung | | |
| 311 | Rückleitung | | |
| 312 | Vorratstank | | |
| 313 | Speiseleitung | | |
| 314 | Strömungsrichtung | | |

## Patentansprüche

1. Kabelsystem (300) mit wenigstens zwei supraleitfähigen Kabeln (302-304), die jeweils einen supraleitfähigen Leiter aufweisen, der in einem Innenraum eines vakuumisolierten Kabelkryostaten aufgenommen ist, in welchem Kühlmittel enthalten ist, das den supraleitfähigen Leiter im Betrieb des Kabelsystems auf Temperaturen unterhalb einer Sprungtemperatur des supraleitfähigen Leiters hält, wobei zwischen dem kühlmittelführenden Innenräumen der Kabelkryostaten eine Verbindung (308) angeordnet ist, **dadurch gekennzeichnet, dass** die Verbindung im Normalbetrieb mit einer Berstscheibe (406,407) verschlossen ist, so dass die Innenräume der Kabelkryostaten strömungsmäßig voneinander getrennt sind.

2. Kabelsystem nach Anspruch 1, **dadurch gekennzeichnet, dass** in der Verbindung (308) zwei Berstscheiben (406,407) angeordnet sind, zwischen denen ein Hohlraum (408) eingeschlossen ist.

3. Kabelsystem nach Anspruch 2, **dadurch gekennzeichnet, dass** im Normalbetrieb des Kabelsystems in dem Hohlraum (408) zwischen den zwei Berstscheiben (406,407) ein Druck herrscht, der niedriger ist, als der Druck in den Innenräumen der Kabelkryostaten.

4. Kabelsystem nach Anspruch 2 oder 3, **dadurch gekennzeichnet, dass** die Berstscheiben (406,407) eine konkav-konvexe Gestalt haben.

5. Kabelsystem nach einem der vorstehenden Ansprüche, **dadurch gekennzeichnet, dass** die Verbindung (308) vakuumisoliert ist.

6. Kabelsystem nach einem der vorstehenden Ansprüche, **dadurch gekennzeichnet, dass** das Vakuum der Verbindung von dem Vakuum der Kabelkryostaten getrennt ist.

7. Kabelsystem nach einem der vorstehenden Ansprüche, **dadurch gekennzeichnet, dass** sich die vakuumisolierten Bereiche des Kabelkryostaten und der Verbindung überlappen.

## Claims

1. A cable system (300) having at least two superconductive cables (302-304), which in each case have a superconductive conductor, which is accommodated in an inner space of a vacuum-insulated cable cryostat, in which coolant is contained, which keeps the superconductive conductor during operation of the cable system at temperatures below a transition temperature of the superconductive conductor, wherein a connection (308) is arranged between the coolant-conducting inner spaces of the cable cryostat, **characterized in that** the connection is closed in normal operation with a rupture disk (406, 407), so that the inner spaces of the cable cryostat are separated from one another fluidically.

2. The cable system according to claim 1, **characterized in that** two rupture disks (406, 407) are arranged in the connection (308), between which rupture disks a cavity (408) is enclosed.

3. The cable system according to claim 2, **characterized in that** in the normal operation of the cable system a pressure prevails in the cavity (408) between the two rupture disks (406, 407), which is lower, than the pressure in the inner spaces of the cable cryostat.

4. The cable system according to claim 2 or 3, **characterized in that** the rupture disks (406, 407) have a concave-convex shape.

5. The cable system according to any one of the preceding claims, **characterized in that** the connection (308) is vacuum-insulated.

6. The cable system according to any one of the preceding claims, **characterized in that** the vacuum of the connection is separated from the vacuum of the cable cryostat.

7. The cable system according to any one of the preceding claims, **characterized in that** the vacuum-insulated regions of the cable cryostat and the connection overlap.

## Revendications

1. Système de câbles (300) avec au moins deux câbles supraconducteurs (302-304) qui comportent chacun un conducteur supraconducteur qui est logé dans un espace intérieur d'un cryostat de câble isolé sous vide dans lequel est contenu un agent de refroidissement qui, pendant le fonctionnement du système de câbles, maintient le conducteur supraconducteur à des températures inférieures à une température de transition du conducteur supraconducteur, un raccordement (308) étant disposé entre les espaces intérieurs des cryostats de câble conduisant l'agent de refroidissement, **caractérisé en ce que**, pendant le fonctionnement normal, le raccordement est fermé avec un disque de rupture (406, 407) de telle sorte que les espaces intérieurs des cryostats de câble sont fluidiquement séparés les uns des autres.

2. Système de câbles selon la revendication 1, **caractérisé en ce que** deux disques de rupture (406, 407) sont disposés dans le raccordement (308), entre lesquels est enfermée une cavité (408).

3. Système de câbles selon la revendication 2, **caractérisé en ce que**, pendant le fonctionnement normal du système de câbles, il règne dans la cavité (408), entre les deux disques de rupture (406, 407), une pression qui est inférieure à la pression dans les espaces intérieurs des cryostats de câble.

4. Système de câbles selon la revendication 2 ou 3, **caractérisé en ce que** les disques de rupture (406, 407) ont une forme concave-convexe.

5. Système de câbles selon l'une des revendications précédentes, **caractérisé en ce que** le raccordement (308) est isolé sous vide.

6. Système de câbles selon l'une des revendications précédentes, **caractérisé en ce que** le vide du raccordement est séparé du vide des cryostats de câble.

7. Système de câbles selon l'une des revendications précédentes, **caractérisé en ce que** les zones isolées sous vide du cryostat de câble et du raccordement se chevauchent.
